# EUROPEAN PATENT SPECIFICATION

(11) **EP 3 168 027 B1**
(45) Date of publication and mention of the grant of the patent: **18.12.2019**
(21) Application number: 16197633.7
(22) Date of filing: 08.11.2016
(51) Int. Cl.: B29C 45/76

(54) **INJECTION MOLDING INFORMATION MANAGEMENT DEVICE AND INJECTION MOLDING MACHINE**
SPRITZGIESSINFORMATIONSVERWALTUNGSVORRICHTUNG UND SPRITZGIESSMASCHINE
DISPOSITIF DE GESTION D'INFORMATIONS DE MOULAGE PAR INJECTION ET MACHINE DE MOULAGE PAR INJECTION

(30) Priority: 11.11.2015 JP 2015221269
(43) Date of publication of application: 17.05.2017
(73) Proprietor: SUMITOMO HEAVY INDUSTRIES, LTD., Tokyo 141-6025 (JP)
(72) Inventor: MORITA, Hiroshi, Chiba-shi, Chiba 263-0001 (JP); ABE, Masahiro, Chiba-shi, Chiba 263-0001 (JP); SHIBATA, Tatsuya, Chiba-shi, Chiba 263-0001 (JP); HOTTA, Daigo, Chiba-shi, Chiba 263-0001 (JP)
(74) Representative: Louis Pöhlau Lohrentz

(56) References cited:
- DE-B3-102006 033 421
- DE-U1-202010 007 655

## Description

### BACKGROUND OF THE INVENTION

### Field of the Invention

Certain embodiment of the present invention relates to an injection molding information management device and an injection molding machine.

Priority is claimed to Japanese Patent Application No. 2015-221269, filed November 11, 2015, the entire content of which is incorporated herein by reference.

### Description of Related Art

In a production management system of a molding machine disclosed in Japanese Unexamined Patent Application Publication No. 2009-140449, a replacement timing of a constituent member of a molding unit or a maintenance timing thereof is prediction-calculated based on data with respect to the number of cumulative molding performed by the molding unit, and the calculation results are displayed.

German Patent Application DE 10 2006 033421 B3 discloses an injection molding machine with a sensor comprising a processing unit that categorizes signals received from a probe by comparison with a classification table and sends an error signal to a control unit if a defect is detected. DE202010007655 discloses a device for monitoring and/or optimizing flow processes, in particular injection molding processes. Vibrations caused by a flow of a material are detected and analyzed, wherein a vibration spectrum is detected at different times or in a continuous manner and subjected to a multidimensional analysis.

In the production management system of the related art, the state of the constituent member of the molding unit is managed by the data with respect to the number of molding. However, the management is not sufficient.

### SUMMARY OF THE INVENTION

The present invention is made in consideration of the above-described problem, and an object thereof is to provide an injection molding information management device in which a deterioration degree of a part used in injection molding can be accurately detected.

In order to achieve the above-described object, according to an aspect of the present invention, there is provided an injection molding information management device which manages information of a part used in an injection molding machine, in which the injection molding information management device is configured to calculate a total value after a start of use of the part with respect to the product of a value of a physical quantity indicating a load applied to the part at one-time shot and the number of times of shots at the value.

According to the aspect of the present invention, an injection molding information management device is provided in which a deterioration degree of a part used in injection molding can be accurately detected.

### BRIEF DESCRIPTION OF THE DRAWINGS

Fig. 1 is a view showing a state when mold opening of an injection molding machine according to an embodiment is completed.
Fig. 2 is a view showing a state when a mold of the injection molding machine according to the embodiment is clamped.
Fig. 3 is an image which is displayed by an output unit according to the embodiment.
Fig. 4 is an image which is displayed by an output unit according to a modification example.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

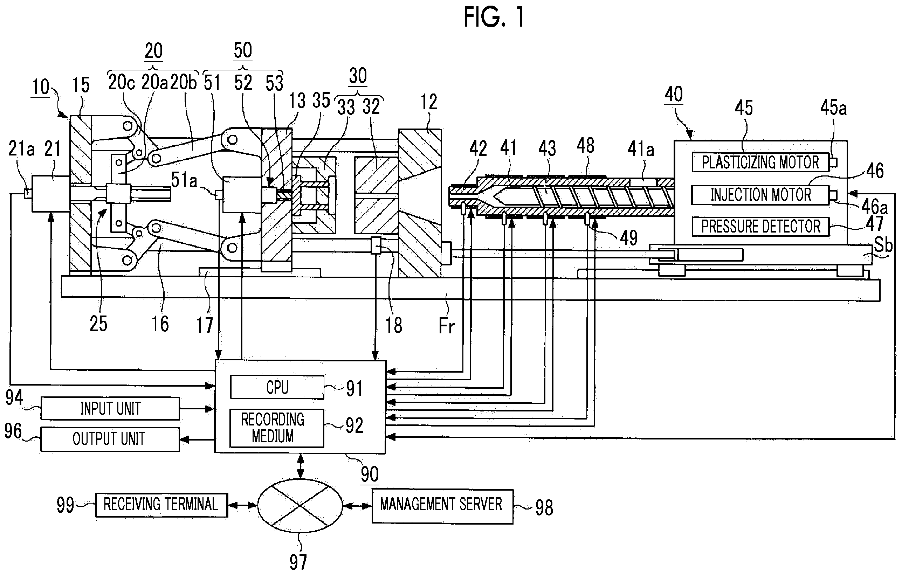

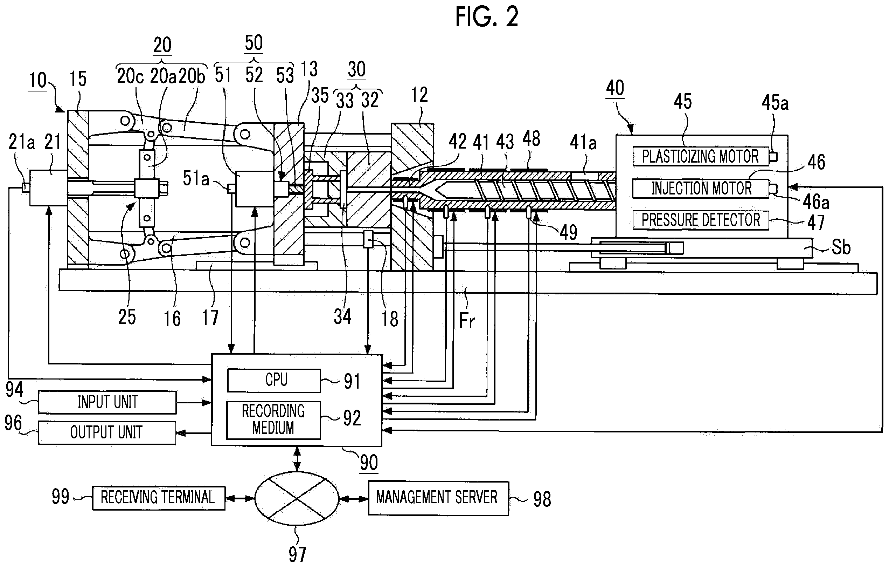

Fig. 1 is a view showing a state when mold opening of an injection molding machine according to an embodiment is completed. Fig. 2 is a state when a mold of the injection molding machine according to the embodiment is clamped.

As shown in Figs. 1 and 2, for example, the injection molding machines includes a frame Fr, a mold clamping unit 10, an injection unit 40, an ejector unit 50, and a controller 90.

First, the mold clamping unit 10 and the ejector unit 50 are described. In the descriptions of the mold clamping unit 10 or like, a movement direction (right direction in Figs. 1 and 2) of a movable platen 13 when a mold is closed is defined as a front side, and a movement direction (left direction in Figs. 1 and 2) of the movable platen 13 when the mold is open is defined as a rear side.

The mold clamping unit 10 performs mold-closing, mold-clamping, and mold-opening of a mold unit 30. The mold clamping unit 10 includes a stationary platen 12, the movable platen 13, a support platen 15, a tie bar 16, a toggle mechanism 20, a mold clamping motor 21, and a movement conversion mechanism 25.

The stationary platen 12 is fixed to the frame Fr. A stationary mold 32 is attached to a surface of the stationary platen 12 facing the movable platen 13.

The movable platen 13 is movable along a guide (for example, guide rail) 17 which is placed on the frame Fr, and is movable forward and backward with respect to the stationary platen 12. A movable mold 33 is attached to a surface of the movable platen 13 facing the stationary platen 12.

By moving the movable platen 13 forward and backward with respect to the stationary platen 12, opening, clamping, and closing of the mold are performed. The mold unit 30 is configured of the stationary mold 32 and the movable mold 33.

The support platen 15 is connected so as to be separated from the stationary platen 12, and is placed to be movable on the frame Fr in mold opening and closing directions. In addition, the support platen 15 may be movable along a guide which is placed on the frame Fr. The guide of the support platen 15 may be also used as the guide 17 of the movable platen 13.

In addition, in the present embodiment, the stationary platen 12 is fixed to the frame Fr, and the support platen 15 is movable in the mold opening and closing directions with respect to the frame Fr. However, the support platen 15 may be fixed to the frame Fr, and the stationary platen 12 may be movable in the mold opening and closing directions with respect to the frame Fr.

The stationary platen 12 and the support platen 15 are connected to each other at intervals by the tie bar 16. Multiple tie bars 16 may be used. The tie bars 16 are parallel in the mold opening and closing directions, and extend according to a mold clamping force. A mold clamping force detector 18 is provided in at least one tie bar 16. The mold clamping force detector 18 may be a strain gauge type detector, detects the mold clamping force by detecting strain of the tie bar 16, and sends signals indicating detection results to the controller 90.

In addition, the mold clamping force detector 18 is not limited to the strain gauge type detector, and may be a piezoelectric type detector, a capacitance type detector, a hydraulic type detector, an electromagnetic type detector, or the like, and the attachment position of the mold clamping force detector 18 is also not limited to the tie bar 16.

The toggle mechanism 20 is provided between the movable platen 13 and the support platen 15. The toggle mechanism 20 is configured of a crosshead 20a, multiple links 20b and 20c, or the like. One link 20b is attached so as to be oscillated to the movable platen 13 by pins or the like. The other link 20c is attached so as to be oscillated to the support platen 15 by pins or the like. The links 20b and 20c are bendably/strechably connected by pins or the like. By moving the crosshead 20a forward and backward, the multiple links 20b and 20c are bent and stretched, and the movable platen 13 moves forward and backward with respect to the support platen 15.

The mold clamping motor 21 is attached to the support platen 15, moves the crosshead 20a forward and backward, and moves the movable platen 13 forward and backward. The movement conversion mechanism 25, which converts a rotational motion of the mold clamping motor 21 into a linear motion and transmits the linear motion to the crosshead 20a, is provided between the mold clamping motor 21 and the crosshead 20a. For example, the movement conversion mechanism 25 is a ball screw mechanism. For example, the position or the speed of the crosshead 20a is detected by an encoder 21a of the mold clamping motor 21, or the like. Signals indicating the detection results are sent to the controller 90.

The operation of the mold clamping unit 10 is controlled by the controller 90. The controller 90 controls a mold closing process, a mold clamping process, a mold opening process, or the like.

In the mold closing process, by driving the mold clamping motor 21 and moving the crosshead 20a forward at a setting speed, the movable platen 13 moves forward, and the movable mold 33 comes into contact with the stationary mold 32.

In the mold clamping process, by further driving the mold clamping motor 21, a mold clamping force is generated. When the mold is clamped, a cavity space 34 is formed between the movable mold 33 and the stationary mold 32, and the cavity space 34 is filled with a liquid molding material. The molding material filling the cavity space 34 is solidified to obtain a molding product. Multiple cavity spaces 34 may be used, and in this case, multiple molding products can be simultaneously obtained.

In the mold opening process, by driving the mold clamping motor 21 and moving the crosshead 20a backward at a setting speed, the movable platen 13 moves backward, and the movable mold 33 is separated from the stationary mold 32.

In addition, the mold clamping unit 10 of the present embodiment has the mold clamping motor 21 as a drive source. However, instead of the mold clamping motor 21, the mold clamping unit 10 may have a hydraulic cylinder. Moreover, the mold clamping unit 10 may have a linear motor for opening and closing a mold, and may have an electromagnet for clamping a mold.

In addition, the mold clamping unit 10 of the present embodiment is a horizontal type mold clamping unit in which the mold opening and closing directions are the horizontal direction. However, the mold clamping unit 10 may be a vertical type mold clamping unit in which the mold opening and closing directions are the vertical direction.

The ejector unit 50 ejects a molding product from the mold unit 30. The ejector unit 50 includes an ejector motor 51, a movement conversion mechanism 52, and an ejector rod 53.

The ejector motor 51 is attached to the movable platen 13. The ejector motor 51 is directly attached to the movement conversion mechanism 52. However, the ejector motor 51 may be connected to the movement conversion mechanism 52 via a belt, pulley, or the like.

The movement conversion mechanism 52 converts a rotational motion of the ejector motor 51 into a linear motion of the ejector rod 53. For example, the movement conversion mechanism 52 is configured of a ball screw mechanism or the like.

The ejector rod 53 is movable forward and backward in a through hole of the movable platen 13. The front end section of the ejector rod 53 comes into contact with the movable member 35 which is disposed to be movable forward and backward in the movable mold 33. In addition, the ejector rod 53 may be connected to the movable member 35.

The operation of the ejector unit 50 is controlled by the controller 90. The controller 90 controls an ejection process or the like.

In the ejection process, by driving the ejector motor 51 and moving the ejector rod 53 forward, the movable member 35 moves forward, and a molding product is ejected. Thereafter, by driving the ejector motor 51 and moving the ejector rod 53 backward, the movable member 35 moves backward to the original position. For example, the position or the speed of the ejector rod 53 is detected by an encoder 51a of the ejector motor 51. Signals indicating the detection results are sent to the controller 90.

Next, the injection unit 40 is described. Different from the descriptions of the mold clamping unit 10, in descriptions of the injection unit 40, a movement direction (left direction in Figs. 1 and 2) of a screw 43 during filling is referred to as a front side, and a movement direction (right direction in Figs. 1 and 2) of the screw 43 during plasticizing is referred to as a rear side.

The injection unit 40 is installed on a slide base Sb which is movable forward and backward with respect to the frame Fr, and is movable forward and backward with respect to the mold unit 30. The injection unit 40 is touched on the mold unit 30, and fills the inner portion of the mold unit 30 with the molding material.

For example, the injection unit 40 includes a cylinder 41, a nozzle 42, the screw 43, a plasticizing motor 45, an injection motor 46, and a pressure detector 47.

The cylinder 41 heats the molding material which is supplied from a supply port 41a to the inner portion of the cylinder 41. The supply port 41a is formed on the rear portion of the cylinder 41. A heat source 48 such as a heater and a temperature detector 49 are provided on the outer periphery of the cylinder 41.

The cylinder 41 is divided into multiple zones in an axial direction (right-left direction in Figs. 1 and 2) of the cylinder 41. The heat source 48 and the temperature detector 49 are provided in each zone. The controller 90 controls the heat source 48 such that a temperature which is actually measured by the temperature detector 49 becomes a setting temperature for each zone.

The nozzle 42 is provided on the front end section of the cylinder 41 and is pressed by the mold unit 30. The heat source 48 such as a heater and the temperature detector 49 are provided on the outer periphery of the nozzle 42. The controller 90 controls the heat source 48 such that an actually measured temperature of the nozzle 42 becomes a setting temperature.

The screw 43 is disposed to be rotatable and to be movable forward and backward in the cylinder 41.

The plasticizing motor 45 rotates the screw 43 to feed the molding material forward along spiral grooves of the screw 43. The molding material is gradually melted by heat from the cylinder 41 while being fed forward. The liquid molding material is fed to the front portion of the screw 43 and is accumulated in the front portion of the cylinder 41, and thus, the screw 43 moves backward.

The injection motor 46 moves the screw 43 forward and backward. The injection motor 46 moves the screw 43 forward, and thus, the liquid molding material accumulated in the front side of the screw 43 is injected from the cylinder 41, and the inner portion of the mold unit 30 is filled with the liquid molding material. Thereafter, the injection motor 46 presses the screw 43 forward, and applies a pressure to the molding material inside the mold unit 30. Accordingly, insufficient molding materials can be replenished. A movement conversion mechanism which converts a rotational motion of the injection motor 46 into a liner motion of the screw 43 is provided between the injection motor 46 and the screw 43. For example, this movement conversion mechanism is configured of a ball screw mechanism.

For example, the pressure detector 47 is disposed between the injection motor 46 and the screw 43, and detects a pressure which is applied from the molding material to the screw 43, a back pressure with respect to the screw 43, or the like. The pressure which is applied from the molding material to the screw 43 corresponds to the pressure which is applied from the screw 43 to the molding material. The pressure detector 47 sends signals indicating the detection results to the controller 90.

The operation of the injection unit 40 is controlled by the controller 90. The controller 90 controls a filling process, a holding pressure process, a plasticizing process, or the like.

In the filling process, the injection motor 46 is driven so as to move the screw 43 forward at a setting speed, and the inner portion of the mold unit 30 is filled with the liquid molding material accumulated in the front side of the screw 43. For example, the position or the speed of the screw 43 is detected by an encoder 46a of the injection motor 46, or the like. Signals indicating the detection results are sent to the controller 90. If the position of the screw 43 reaches a predetermined position, switching from the filling process to the holding pressure process (so called V/P switching) is performed. The setting speed of the screw 43 may be changed according to the position of the screw 43, time, or the like.

In addition, in the filing process, after the position of the screw 43 reaches a predetermined position, the screw 43 may temporarily stop at the predetermined position, and thereafter, the V/P switching may be performed. Immediately before the V/P switching, instead of stopping the screw 43, the screw 43 may move forward or may move backward at a very slow speed.

In the holding pressure process, the injection motor 46 is driven so as to press the screw 43 forward at a setting pressure, and a pressure is applied to the molding material inside the mold unit 30. Insufficient molding materials can be replenished. For example, the pressure of the molding material is detected by the pressure detector 47. Signals indicating the detection results are sent to the controller 90.

In the holding pressure process, the molding material inside the mold unit 30 is gradually cooled, and when the holding pressure process is completed, the inlet of the cavity space 34 is closed by the solidified molding material. This state is referred to as a gate seal, and a backflow of the molding material from the cavity space 34 is prevented. After the holding pressure process, a cooling process starts. In the coolingprocess, solidification of the molding material inside the cavity space 34 is performed. In order to shorten a molding cycle, the plasticizing process may be performed during the cooling process.

In the plasticizing process, the plasticizing motor 45 is driven so as to rotate the screw 43 at a setting rotating speed, and the screw 43 feeds the molding material forward along the spiral grooves of the screw 43. According to this, the molding material is gradually melted. The screw 43 moves backward as the liquid molding material is fed to the front side of the screw 43 and is accumulated in the front portion of the cylinder 41. For example, the rotating speed of the screw 43 is detected by an encoder 45a of the plasticizing motor 45. Signals indicating the detection results are sent to the controller 90.

In the plasticizing process, in order to restrict an abrupt rearward movement of the screw 43, the injection motor 46 may be driven so as to apply a setting back pressure to the screw 43. For example, the back pressure with respect to the screw 43 is detected by the pressure detector 47. Signals indicating the detection results are sent to the controller 90. If the screw 43 moves backward to the predetermined position and a predetermined amount of the molding materials is accumulated in the front side of the screw 43, the plasticizing process ends.

Moreover, the injection unit 40 of the present embodiment is an inline-screw type injection unit. However, the injection unit 40 may be a pre-plasticizing type injection unit. In the pre-plasticizing type injection unit, a molding material melted in a plasticization cylinder is supplied to the injection cylinder, and the molding material is injected from the injection cylinder to a mold unit. A screw is disposed in the plasticization cylinder to be rotatable or to be rotatable and movable forward and backward, and a plunger is disposed in the injection cylinder to be movable forward and backward.

As shown in Figs. 1 and 2, the controller 90 includes a central processing unit (CPU) 91, and a recording medium 92 such as a memory. By carrying out a program stored in the recording medium 92 using the CPU 91, the controller 90 controls the mold clamping unit 10, the injection unit 40, the ejector unit 50, or the like.

For example, the controller 90 performs a cyclical operation in which molding products are repeatedly manufactured under the same setting conditions. For example, in the cyclical operation, a series of processes such as the mold closing process, the mold clamping process, the filling process, the holding pressure process, the cooling process, the mold opening process, or the ejection process are repeatedly performed. As the setting conditions, conditions which are input by an input unit 94 or like and are stored in a recording medium 92 are read to be used. For example, a touch panel is used as the input unit 94. The touch panel also serves as an output unit 96 described below.

The controller 90 also serves as an information management device which manages information of parts used in injection molding. In addition, the controller 90 and the information management device may be separately provided from each other. The information management device may acquire information from the controller 90 via a network 97 such as an internet line. Instead of the network 97, a portable information recording medium may be also used.

The part (hereinafter, referred to as a "management part") in which information is managed by the controller 90 may be any one as long as a load is applied to it when the injection molding is performed and it is replaceable. The management part may be any part of the mold clamping unit 10, the mold unit 30, the injection unit 40, the ejector unit 50, and the like. One management part may be used, or multiple management parts may be used. Each management part may be configured of one component, or may be configured of multiple components. For example, a unit configured of multiple components maybe treated as one management part.

The controller 90 manages a physical quantity indicating a load applied to the management part when the cycle is performed. For example, as the physical quantity indicating the load, at least one selected from a force, a pressure, torque, a temperature, a current, a movement distance (for example, a rotation movement distance or a linear movement distance), and a load time is singularly used, or combination thereof is used. In the combination, one or more of addition, subtraction, multiplication, and division may be used. For example, the combination includes multiplication between the force and the movement distance, multiplication between the force and the load time, division between the movement distance and the load time (that is, speed), or the like. Among the physical quantity, a physical quantity according to the kind of the management part is adopted. Multiple kinds of physical quantity may be adopted with respect to one management part. In addition, the value of the physical quantity indicating the load may be a positive value, and the value of the physical quantity may increase as the load increases.

For example, in a case where the management part is a sliding part of the mold clamping unit 10, as the physical quantity indicating the load, at least one selected from a friction force, a sliding distance, and a load time is singularly used, or combination thereof is used. Since the friction force is proportional to the mold clamping force, the mold clamping force may be used instead of the friction force. The sliding part of the mold clamping unit 10 includes a pin of the toggle mechanism 20, a ball screw mechanism serving as a movement conversion mechanism, a bearing, or the like. The bearing may be any one of a sliding bearing such as a bush or a rolling bearing.

In a case where the management part is a structural part of the mold clamping unit 10, as the physical quantity indicating the load, at least one selected from the molding clamping force and the load time is singularly used, or combination thereof is used. The structural part of the mold clamping unit 10 includes the stationary platen 12, the movable platen 13, the support platen 15, the tie bar 16, or the like.

In a case where the management part is the structural part of the mold unit 30, as the physical quantity indicating the load, at least one selected from the mold clamping force and the load time is singularly used, or combination thereof is used. In a case where the management part is a heater which is built in the mold unit 30, as the physical quantity indicating the load, at least one selected from the mold clamping force, the current, and the load time is singularly used, or combination thereof is used.

In a case where the management part is a heater of the injection unit 40, as the physical quantity indicating the load, at least one selected from the current and the load time is singularly used, or combination thereof is used.

In a case where the management part is the screw 43 of the injection unit 40, as the physical quantity indicating the load, at least one selected from the sliding distance (for example, reciprocation movement distance in forward and rearward directions), the pressure, the torque, and the load time is singularly used, or combination thereof is used.

In a case where the management part is the mold clamping motor 21, the plasticizing motor 45, the injection motor 46, the ejector motor 51, or the like, as the physical quantity indicating the load, the toque, the load time, or the like is adopted. Since the torque corresponds to the current, the current may be used instead of the torque.

In the cyclical operation, the molding product is repeatedly manufactured under the same setting conditions. If the setting conditions are changed, a load which is applied to the management part at one-time shot is changed.

Accordingly, the controller 90 calculates a total value (summation) after a start of use of the management part with respect to the product of a value of a physical quantity indicating a load applied to the management part at one-time shot and the number of times of shots at the value. The controller 90 considers the variation of the loads according to the changes of the setting conditions, and accurately detects a deterioration degree of the management part.

In a case where information of multiple management parts is managed, the controller 90 calculates the total value after a start of use of the management part with respect to the product of the value of the physical quantity indicating the load applied to the management part at one-time shot and the number of times of shots at the value for each management part. This is because the variation widths of loads due to the changes of the setting conditions are different from each other according to the management part.

The controller 90 may obtain the value of the physical quantity indicating the load from the setting conditions, and may detect the value by a detector or the like.

As the setting conditions, conditions which are input by an input unit 94 or like and are stored in a recording medium 92 are read to be used. For example, the control amount includes the molding clamping force or an applying time of the mold clamping force in the mold clamping process, the pressure of the molding material or an applying time of the pressure in the holding pressure processing, a back pressure of the screw 43 in the plasticizing process, the torque of the ejector motor 51 in the ejection process, the temperature of the mold unit 30, the temperature of the cylinder 41, or the like.

As the detector, a general detector which is mounted on the injection molding machine is used. For example, specifically, the detector includes a load detector, a pressure detector, a torque detector, a current detector, atimer, a position detector, a rotation angle detector, a temperature detector, or the like.

If the controller 90 detects replacement of the management part, the controller 90 resets the total value with respect to the management part to zero. For example, the controller 90 detects a replacement timing of the management part by an input operation performed by a user on the input unit 94 or the like. Use start timings of the management parts may be different from each other according to the management part.

The controller 90 outputs notification based on the calculated total value to the output unit 96. An image, sound, or the like is used for the notification. The notification may be related to the deterioration degree of the management part. A user of the injection molding machine who receives the notification can understand the deterioration degree of the management part or the like.

For example, in a case where the total value exceeds a threshold value, the controller 90 outputs an alarm to the output unit 96 using an image, sound, or the like. In a case where multiple management parts are used, a threshold value is prepared for each management part. The threshold value is obtained by endurance test which has been performed in advance or the like, and the threshold value which is stored in the recording medium 92 is read to be used.

One threshold value may be used or multiple threshold values may be used with respect to one management part. In a case where multiple threshold values are used, multiple kinds of alarm corresponding to the multiple threshold values is prepared. For example, in a case where the total value exceeds a first threshold value, an alarm which recommends the replacement of the part is output, and in a case where the total value is greater than the first threshold value and exceeds the second threshold value, an alarm which issues stopping of use of the part is output.

In addition, in a case where the total value exceeds a predetermined threshold value (for example, the second threshold value), an alarm is output, and simultaneously, the automatic operation of the injection molding machine may be stopped.

The controller 90 may output an image indicating a relationship between the calculated total value and the threshold value to the output unit 96. In a case where multiple management parts are used, the relationship between the total value and the threshold value is represented for each management part. The total value may be represented as a ratio of the total value with respect to the threshold value.

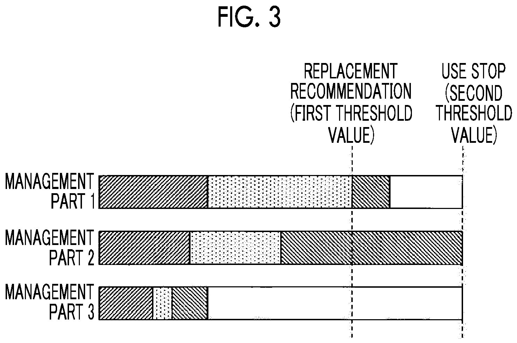

Fig. 3 is an image which is displayed by the output unit according to the embodiment. This image indicates a relationship among the total value, the first threshold value, and the second threshold value for each management part. The total value may be represented as a ratio of the total value with respect to the first threshold value until the total value exceeds the first threshold value, and may be represented as a ratio of the total value with respect to the second threshold value until the total value reaches the second threshold value after exceeding the first threshold value.

The image shown in Fig. 3 indicates the ratio of the product of the value of a physical quantity indicating the load and the number of times of shots at the value with respect to the total value for each setting condition. For example, in the image, the total value is indicated by a bar graph, and the bar is shown to be partitioned for each setting condition. Accordingly, it is possible to easily understand influences of the setting condition.

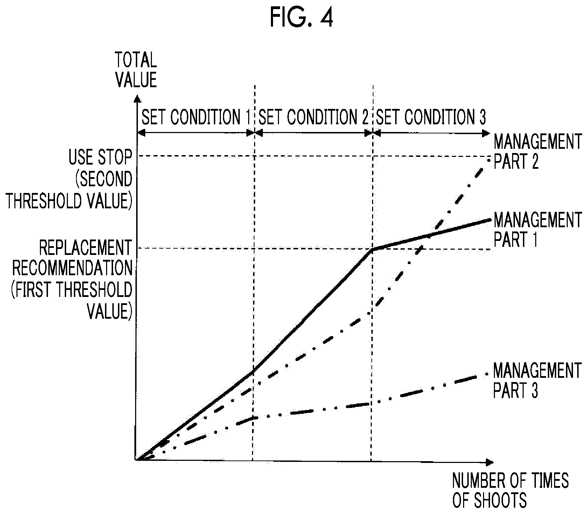

Fig. 4 shows an image which is displayed by an output unit according to a modification example. In this image, the total value is indicated by a line graph, and for example, a horizontal axis indicates the number of times of shots, and a vertical axis indicates the total value. In this case, it is possible to indicate the ratio of the product of the value of a physical quantity indicating the load and the number of times of shots at the value with respect to the total value for each setting condition.

The controller 90 assumes the number of times of shots or the number of days until the total value reaches the threshold value from a use situation from the start of use (for example, the number of times of shots or the number of days from the start of use), and may output the assumed results to the output unit 96.

The controller 90 may send the total value and/or the notification based on the total value to the management server 98 via the network 97 such as an internet wire. In this case, the controller 90 causes the total value, the notification based on the total value, an identification number of a management part, and an identification number of the injection molding machine to be associated with each other, and sends the association to the management server 98. Similarly to the controller 90, the management server 98 includes a CPU, a recording medium, or the like.

The management server 98 receives the information sent from the controller 90. The management server 98 sends the received information to a receiving terminal 99, which is registered in advance, via the network 97. The receiving terminal 99 may be a stationary terminal such as computer or a mobile terminal such as a cellular phone . A user who uses the injection molding machine can reduce labors required to contact a manager who manages the injection molding machine. The manager performs preparation of the replacement part, arrangement of a repair worker, or the like, based on the information received by the receiving terminal 99.

In addition, the controller 90 may send information to the receiving terminal 99 which is registered in advance without through the management server 98.

Hereinbefore, the embodiment or the like of the injection molding information management device is described. However, the present invention is not limited to the above-described embodiment or the like. Various modifications and improvement may be applied to the present invention within the scope which does not depart from the gist of the present invention described in claims.

## Claims

1. An injection molding information management device (90) which manages information of a part of an injection molding machine,
**characterized in that** the injection molding information management device (90) is configured to calculate a total value after a start of use of the part with respect to the product of a value of a physical quantity indicating a load applied to the part at one-time shot and the number of times of shots at the value, and to detect a deterioration degree of the part from the calculated total value.

2. The injection molding information management device (90) according to claim 1,
wherein information of multiple parts used in the injection molding is managed, and
wherein the total value after the start of use of the part with respect to the product of the value of the physical quantity indicating the load applied to the part at one-time shot and the number of times of shots at the value is calculated for each part.

3. The injection molding information management device (90) according to claim 1 or 2,
wherein as the physical quantity indicating the load, at least one selected from a force, a pressure, torque, a temperature, a current, a movement distance, and a load time is singularly used, or combination thereof is used.

4. The injection molding information management device (90) according to any one of claims 1 to 3,
wherein notification based on the total value is output to the output unit (96).

5. The injection molding information management device (90) according to any one of claims 1 to 4,
wherein the injection molding information management device (90) is included in an injection molding machine, and the total value and/or the notification based on the total value is sent to a management server (98).

6. An injection molding machine, comprising:
a mold clamping unit (10) which performs mold-closing, mold-clamping, and mold-opening of a mold unit;
an injection unit (40) which fills the inside of the mold unit with a molding material; and
the injection molding information management device (90) according to any one of claims 1 to 5.

## Patentansprüche

1. Spritzgießinformationsverwaltungsvorrichtung (90), die Informationen von einem Teil einer Spritzgießmaschine verwaltet,
**dadurch gekennzeichnet, dass** die Spritzgießinformationsverwaltungsvorrichtung (90) konfiguriert ist, um einen Gesamtwert nach einem Verwendungsbeginn des Teils in Bezug auf das Produkt eines Werts einer physikalischen Größe, die eine Belastung angibt, die auf das Teil bei einem einmaligen Schuss aufgebracht wird, und der Anzahl der Schüsse bei dem Wert zu berechnen, und um einen Verschleißgrad des Teils aus dem berechneten Gesamtwert zu ermitteln.

2. Spritzgießinformationsverwaltungsvorrichtung (90) nach Anspruch 1,
wobei Informationen von mehreren Teilen, die beim Spritzgießen verwendet werden, verwaltet werden, und wobei der Gesamtwert nach dem Verwendungsbeginn des Teils in Bezug auf das Produkt aus dem Wert der physikalischen Größe, die die Belastung angibt, die auf das Teil bei einem einmaligen Schuss aufgebracht wird, und der Anzahl der Schüsse bei dem Wert, für jedes Teil berechnet wird.

3. Spritzgießinformationsverwaltungsvorrichtung (90) nach Anspruch 1 oder 2,
wobei als die physikalische Größe, die die Belastung angibt, mindestens eine, ausgewählt aus einer Kraft, einem Druck, Drehmoment, einer Temperatur, einem Strom, einer Bewegungsstrecke, und einer Belastungszeit, allein oder in Kombination davon verwendet wird.

4. Spritzgießinformationsverwaltungsvorrichtung (90) nach einem der Ansprüche 1 bis 3,
wobei eine Benachrichtigung auf Basis des Gesamtwerts an die Ausgabeeinheit (96) ausgegeben wird.

5. Spritzgießinformationsverwaltungsvorrichtung (90) nach einem der Ansprüche 1 bis 4,
wobei die Spritzgießinformationsverwaltungsvorrichtung (90) in einer Spritzgießmaschine enthalten ist und der Gesamtwert und/oder die Benachrichtigung auf Basis des Gesamtwerts an einen Verwaltungsserver (98) gesendet wird.

6. Spritzgießmaschine, umfassend:
eine Formschließeinheit (10), die Formschließen, Formklemmen, und Formöffnen einer Formeinheit ausführt;
eine Einspritzeinheit (40), die das Innere der Formeinheit mit einem Formmaterial füllt; und
die Spritzgießinformationsverwaltungsvorrichtung (90) nach einem der Ansprüche 1 bis 5.

## Revendications

1. Un dispositif de gestion d'informations de moulage par injection (90) qui gère des informations d'une partie d'une machine de moulage par injection,
**caractérisé en ce que** le dispositif de gestion d'informations de moulage par injection (90) est configuré pour calculer une valeur totale après un début d'utilisation de la partie par rapport au produit d'une valeur d'une quantité physique qui indique une charge appliquée à la partie lors d'une charge d'injection et du nombre de charges d'injection à la valeur, et pour détecter un degré de détérioration de la partie à partir de la valeur totale calculée.

2. Le dispositif de gestion d'informations de moulage par injection (90) selon la revendication 1,
dans lequel les informations de plusieurs parties utilisées pour le moulage par injection sont gérées, et
dans lequel la valeur totale après le début d'utilisation de la partie par rapport au produit de la valeur de la quantité physique qui indique la charge appliquée à la partie lors d'une charge d'injection et du nombre de charges d'injection à la valeur est calculée pour chaque partie.

3. Le dispositif de gestion d'informations de moulage par injection (90) selon la revendication 1 ou 2,
dans lequel, en guise de quantité physique qui indique la charge, au moins une valeur choisie parmi une force, une pression, un couple, une température, un courant, une distance de déplacement, et une durée de charge est utilisée seule, ou une combinaison de celles-ci est utilisée.

4. Le dispositif de gestion d'informations de moulage par injection (90) selon l'une quelconque des revendications 1 à 3,
dans lequel une notification qui repose sur la valeur totale est délivrée à l'unité de sortie (96).

5. Le dispositif de gestion d'informations de moulage par injection (90) selon l'une quelconque des revendications 1 à 4,
dans lequel le dispositif de gestion d'informations de moulage par injection (90) est inclus dans une machine de moulage par injection, et la valeur totale et/ou la notification qui repose sur la valeur totale est envoyée à un serveur de gestion (98).

6. Une machine de moulage par injection, comprenant :
une unité de fixation de moule (10) qui effectue la fermeture de moule, la fixation de moule et l'ouverture de moule d'une unité de moule ;
une unité d'injection (40) qui remplit l'intérieur de l'unité de moule avec une substance de moulage ; et
le dispositif de gestion d'informations de moulage par injection (90) selon l'une quelconque des revendications 1 à 5.
